# EUROPEAN PATENT SPECIFICATION

(11) **EP 2 621 106 B1**
(45) Date of publication and mention of the grant of the patent: **01.11.2017**
(21) Application number: 12179066.1
(22) Date of filing: 27.01.2012
(51) Int. Cl.: H04B 7/04

(54) **Electronic device with multiple antenna diversity and related methods**
Elektronisches Gerät mit Mehrantennendiversität und entsprechendes Verfahren
Dispositif électronique multi-antenne de diversité et procédé associé

(43) Date of publication of application: 31.07.2013
(62) Divisional of application: 12152967.1
(73) Proprietor: BlackBerry Limited, Waterloo, ON N2K 0A7 (CA)
(72) Inventor: Khan, Nasserullah, Waterloo, Ontario N2L 3W8 (CA)
(74) Representative: Roberts, Gwilym Vaughan

(56) References cited:
- EP-A1- 1 672 817
- US-A1- 2011 105 049

## Description

### Technical Field

This application relates to the field of communications, and more particularly, to wireless communications systems and related methods.

### Background

Cellular communication systems continue to grow in popularity and have become an integral part of both personal and business communications. Cellular telephones allow users to place and receive phone calls almost anywhere they travel. Moreover, as cellular telephone technology is improved, so too has the functionality of cellular devices. For example, many cellular devices now incorporate Personal Digital Assistant (PDA) features such as calendars, address books, task lists, calculators, memo and writing programs, etc. These multifunction devices usually allow users to wirelessly send and receive electronic mail (email) messages and access the Internet via a cellular network and/or a wireless local area network (WLAN), for example.

As the functionality of cellular devices continues to increase, so too does demand for smaller devices that are easier and more convenient for users to carry. Nevertheless, the move towards multi-functional devices makes miniaturization more difficult as the requisite number of installed components increases. Indeed, the typical cellular device may include several antennas, for example, a cellular antenna, a global positioning system antenna, and a WiFi IEEE 802.11g antenna. These antennas may comprise external antennas and internal antennas.

Generally speaking, internal antennas allow cellular devices to have a smaller footprint. Moreover, they are also preferred over external antennas for mechanical and ergonomic reasons. Internal antennas are also protected by the cellular device's housing and therefore tend to be more durable than external antennas. External antennas may be cumbersome and may make the cellular device difficult to use, particularly in limited-space environments. Yet, one potential drawback of typical internal antennas is that they are in relatively close proximity to the user's head when the cellular device is in use, thereby increasing the specific absorption rate (SAR). Also, other components within the cellular device may cause interference with the internal antenna.

EP 1672817 describes a portable device suitable for communicating with a communications network over a main wireless transmitter/receiver module which comprises a main antenna. The module communicates with the portable device via an interface, wherein said portable device further comprises at least one secondary wireless transmitter/receiver module comprising a diversity antenna and communicating with said main transmitter/receiver module via a direct data link external to said portable device.

US 2011/0105049 describes how a combination of antennas to be used is selected based on a distance between a plurality of antennas or the polarization direction of a radio signal to be transmitted/received.

### Brief Description of the Drawings

FIG. 1 is a schematic block diagram of an example of an electronic device.
FIG. 2 is a flowchart illustrating operation of an example embodiment of an electronic device.
FIG. 3 is a schematic block diagram of another example embodiment of an electronic device.
FIG. 4 is a schematic diagram of an example of the wired connector from FIG. 1.
FIG. 5 is a schematic block diagram illustrating example components of a mobile wireless communications device that may be used with the electronic devices of FIGS. 1 and 3.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

According to a first aspect, there is provided an electronic device is provided and includes a mobile wireless communications device comprising a first housing, a spatial diversity wireless transceiver carried by the first housing,at least one first antenna carried by the first housing and coupled to the spatial diversity wireless transceiver, a wireless local area networking (WLAN) transceiver carried by said first housing and coupled to said spatial diversity wireless transceiver, and a processor. The electronic device also includes an external antenna device comprising a second housing, at least one second antenna carried thereby and configured to be coupled to the spatial diversity wireless transceiver, a wireless transceiver, and a battery configured to power the wireless transceiver. The spatial diversity wireless transceiver is configured to selectively operate the at least one first antenna and the at least one second antenna to provide spatial diversity. The WLAN transceiver configured to wirelessly couple the at least one second antenna to said spatial diversity wireless transceiver. The processor configured to operate said spatial diversity wireless transceiver in a first multiple-input/multiple-output rank mode when the at least one second antenna is not connected to the spatial diversity wireless transceiver, and further configured to operate the spatial diversity wireless transceiver in a second MIMO rank mode when the at least one second antenna is connected to the spatial diversity wireless transceiver, the second MIMO rank mode being greater than the first MIMO rank mode.

The processor may be configured to operate the said spatial diversity wireless transceiver in a first MIMO rank mode using only the said first antenna, and to further operate the said spatial diversity wireless transceiver in a second MIMO rank mode using the said first and said second antennas.

In embodiments, the interface may comprise a wireless local area networking (WLAN) may comprise a Bluetooth wireless transceiver configured to wirelessly couple the at least one second antenna to the spatial diversity wireless transceiver.

For example, in embodiments, the spatial diversity wireless transceiver may comprise a cellular 3GPP Long Term Evolution (LTE) transceiver. The at least one first antenna may be internal with respect to the first housing, and the at least one second antenna may be internal with respect to the second housing.

Another aspect is directed to a method of providing spatial diversity in an electronic device comprising a mobile wireless communications device including a first housing, a spatial diversity wireless transceiver carried by the first housing, and at least one first antenna carried by the first housing and coupled to the spatial diversity wireless transceiver. The method includes wirelessly coupling an external antenna device comprising a second housing, at least one second antenna carried thereby to the spatial diversity wireless transceiver, a wireless transceiver, a battery configured to power the wireless transceiver, and using the spatial diversity wireless transceiver to selectively operate the at least one first antenna and the at least one second antenna to provide the spatial diversity. The method further includes using a processor to operate said spatial diversity wireless transceiver in a first multiple-input/multiple-output -MIMO- rank mode when said at least one second antenna is not connected to said spatial diversity wireless transceiver, and to further operate said spatial diversity wireless transceiver in a second MIMO rank mode when said at least one second antenna is connected to said spatial diversity wireless transceiver, the second MIMO rank mode being greater than the first MIMO rank mode.

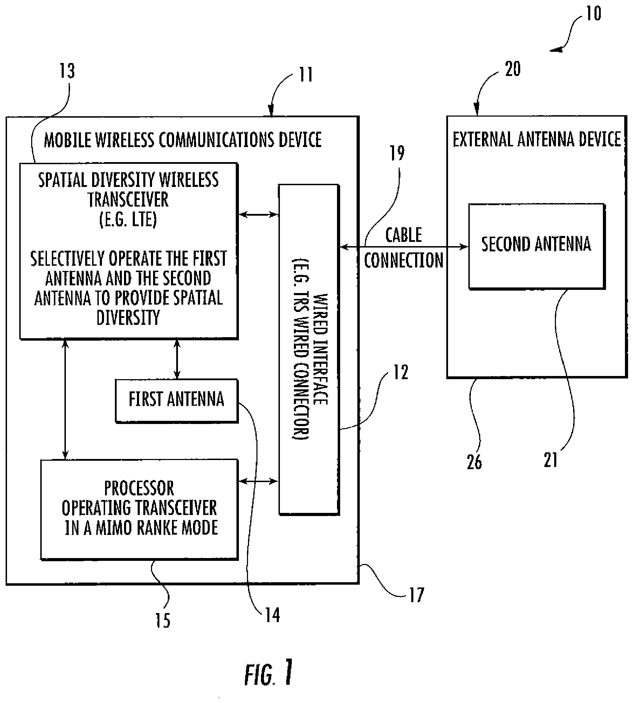

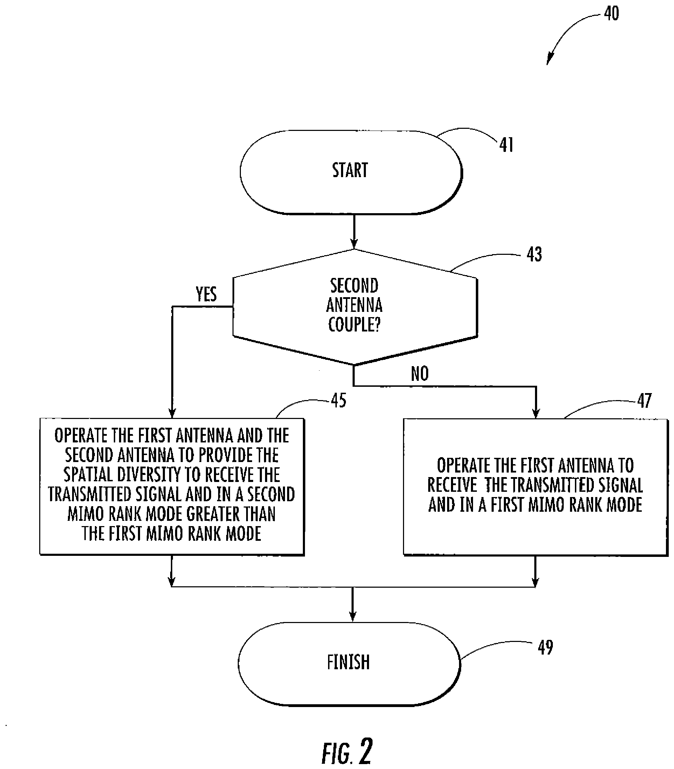

Referring now to FIG. 1, an electronic device **10** according to the present disclosure is now described. Moreover, with reference additionally to FIG. 2, a flowchart **40** illustrates a method of operating the electronic device **10** (Block **41**). The electronic device **10** illustratively includes a mobile wireless communications device **11,** and an external antenna device **20.** Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc. The mobile wireless communications device **11** includes a first housing **17,** a spatial diversity wireless transceiver **13** carried by the first housing, and a first
antenna **14** carried by the first housing and coupled to the spatial diversity wireless transceiver. For example, the spatial diversity wireless transceiver **13** may comprise a cellular 3GPP LTE transceiver, and/or an IEEE 802.16 WiMAX transceiver.

The first antenna **14** may comprise a multi-band antenna, for example, including a plurality of tuning elements, patch structures, and slot structures. In the illustrated embodiment, the mobile wireless communications device **11** includes one first antenna **14,** but in other embodiments, there may be a plurality of first antennas. The first antenna **14** is shown as being internal with respect to the first housing **17,** but may be, in other embodiments, external to the first housing.

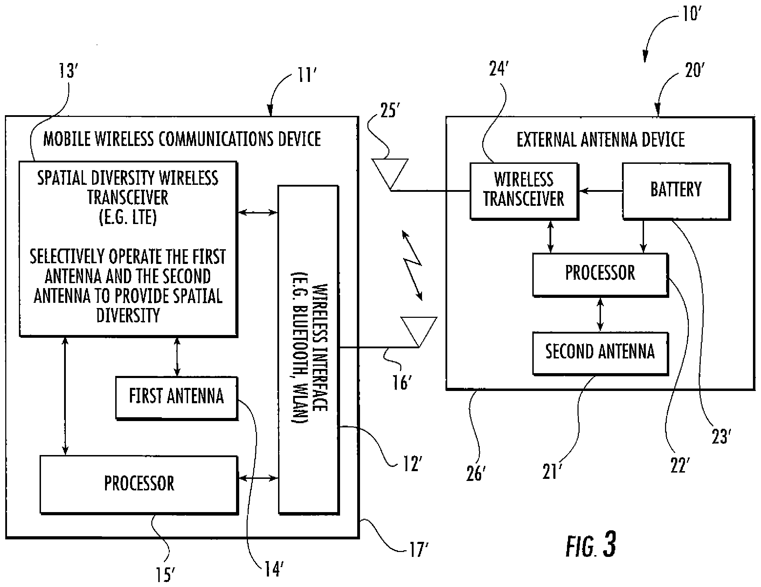

The mobile wireless communications device **11** also illustratively includes a processor **15** coupled to the spatial diversity wireless transceiver **13** and configured to generate data for transmission for the transceiver. For example, the processor **15** may include a single/multi core structure. The mobile wireless communications device **11** also illustratively includes an interface **12,** shown as a wired interface, coupling the spatial diversity wireless transceiver **13** and the external antenna device **20.** Of course, in embodiments, the interface **12** may comprise a wireless interface (FIG. 3).

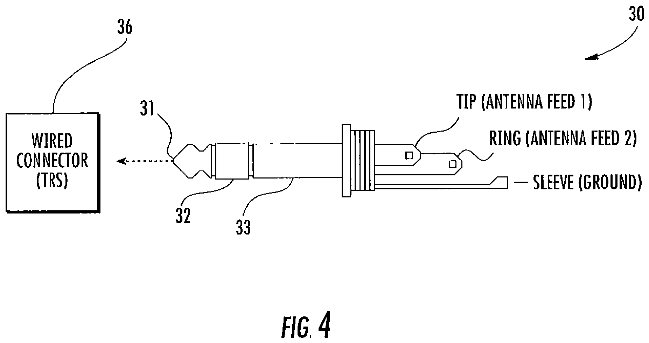

Referring briefly to FIG. 4, in some examples, the wired interface **12** includes a connector **36** carried by the first housing **17** and coupled to the spatial diversity wireless transceiver **13.** For example, the connector **36** may comprise a TRS connector carried by an external surface of the first housing **17.** In other examples, the connector **36** may comprise any suitable connector. The TRS connector **36** is configured to receive a corresponding TRS connector from a cable **19** of the external antenna device **20,** the cable connector comprising a tip connector **31** configured to provide a connection to a first antenna feed, a ring connector **32** configured to provide a connection to a second antenna feed, and a sleeve connector **33** configured to provide a connection to a ground.

In some examples, the TRS connector **36** of the wired interface **12** is the same TRS connector utilized for coupling an external wired headset (not shown). In these examples, the processor **15** is configured to detect whether the external antenna device **20** or a wired headset is coupled to the TRS connect and to operate the spatial diversity wireless transceiver **13** accordingly. In yet other examples, the connector **36** may comprise a micro universal serial bus (USB) connector, or a mini USB connector.

The external antenna device **20** comprises a second housing **26,** and a second antenna **21** carried thereby and configured to be coupled to the spatial diversity wireless transceiver **13** via the wired interface **12.** In the illustrated example, the second antenna **21** is internal with respect to the second housing **26,** but like the first antenna **14,** it also may be externally located.

Additionally, the external antenna device **20** comprises a cable connection **19** for coupling the external antenna device **20,** in particular, the second antenna **21,** to the wired interface **12.** The cable connection **19** extends from the second housing **26** and is configured to be coupled between the second antenna **21** and the connector. The cable connection **19** is removably connected to the wired interface **12.**

During operation of the electronic device **10,** if the user desires improved antenna performance, the user may connect the cable connection from the external antenna device **20** to the wired interface **12** (Block **43**). Once connected, the processor **15** and the spatial diversity wireless transceiver **13** are configured to selectively operate the first antenna **14** and the second antenna **21** to provide improved spatial diversity (Block **45**). Otherwise, i.e. the external antenna device **20** is not connected, the spatial diversity wireless transceiver **13** is configured to operate normally, i.e. conducting communications using only the first antenna **14** (Block **43**).

For example, if the user is about to activate a bandwidth intensive application on the mobile wireless communications device **11,** such as video streaming (uplink and downlink) or operate the device as a mobile hotspot base station, the user would then connect the external antenna device **20.** For improved performance, the external antenna device **20** should be positioned about 6-7 inches (LTE embodiments) from the mobile wireless communications device **11.** Of course, the external antenna device **20** could be placed at any convenient length. The external antenna device **20** is configured to serve as an additional high band and low band antenna for the mobile wireless communications device **11,** permitting it to operate in an LTE MIMO 4X4 (for high band) and 2x2 (in the low band) mode, for example. Advantageously, this may permit the electronic device **10** to offer improved data rates, range, and reliability without requiring additional bandwidth or transmit power. By using both first and second antennas **14, 21**, the electronic device **10** may create multiple independent channels for sending multiple data streams.

As will be appreciated by those skilled in the art, some wireless communications protocols may support a plurality of MIMO rank modes. Operating in a higher ranked mode permits the device to operate with increased data throughput. Advantageously, the processor **15** is configured to operate the spatial diversity wireless transceiver **13** in a first MIMO rank mode when the second antenna **21** is not connected to the spatial diversity wireless transceiver, for example, an LTE MIMO 2X2 (in the high band) and 1x1 (in the low band) mode, and the processor is configured to operate the spatial diversity wireless transceiver in a second MIMO rank mode, for example, the aforementioned LTE MIMO 4X4 (in the high band) and 2x2 (in the low band) mode, when the second antenna is connected to the spatial diversity wireless transceiver. The second MIMO rank mode is greater than the first MIMO rank mode. In other words, when the second antenna **21** is connected to the spatial diversity wireless transceiver **13,** the mobile wireless communications device experiences improved RF performance (Block **49**) and greater data throughput.

Referring now to FIG. 3, another embodiment of the electronic device **10'** is now described. In this embodiment of the electronic device **10',** those elements already discussed above with respect to FIG. 1 are given prime notation and most require no further discussion herein. This embodiment differs from the previous embodiment in that the interface **12'** includes a wireless interface comprising a WLAN transceiver (interface) configured to wirelessly couple the second antenna **21'** to the spatial diversity wireless transceiver **13'.** Moreover, the mobile wireless communications device **11'** further includes an antenna **16'** coupled to the wireless interface **12'.** For example, the wireless interface **12'** may comprise a Bluetooth wireless transceiver configured to wirelessly couple the second antenna **21'** to the spatial diversity wireless transceiver **13'.**

The external antenna device **20'** also includes a wireless transceiver **24',** and an antenna **25'** cooperating therewith and for communicating with the wireless interface **12'** of the mobile wireless communications device **11'.** The external antenna device **20'** also includes a processor **22'** coupled between the second antenna **21'** and the wireless transceiver **24'.** In short, the processor coordinates the received data from the second antenna **21'** and forwards it through the wireless transceiver **24'** to the mobile wireless communications device **11.** The external antenna device **20'** also includes a battery **23'** configured to power the wireless transceiver **24'** and the processor **22'.**

Another example is directed to a method of providing spatial diversity in an electronic device **10** comprising a mobile wireless communications device **11** including a first housing **17,** a spatial diversity wireless transceiver **13** carried by the first housing, and at least one first antenna **14** carried by the first housing and coupled to the spatial diversity wireless transceiver. The method may include coupling an external antenna device **20** comprising a second housing **26,** and at least one second antenna **21** carried thereby to the spatial diversity wireless transceiver **13,** and using the spatial diversity wireless transceiver to selectively operate the at least one first antenna **14** and the at least one second antenna to provide the spatial diversity.

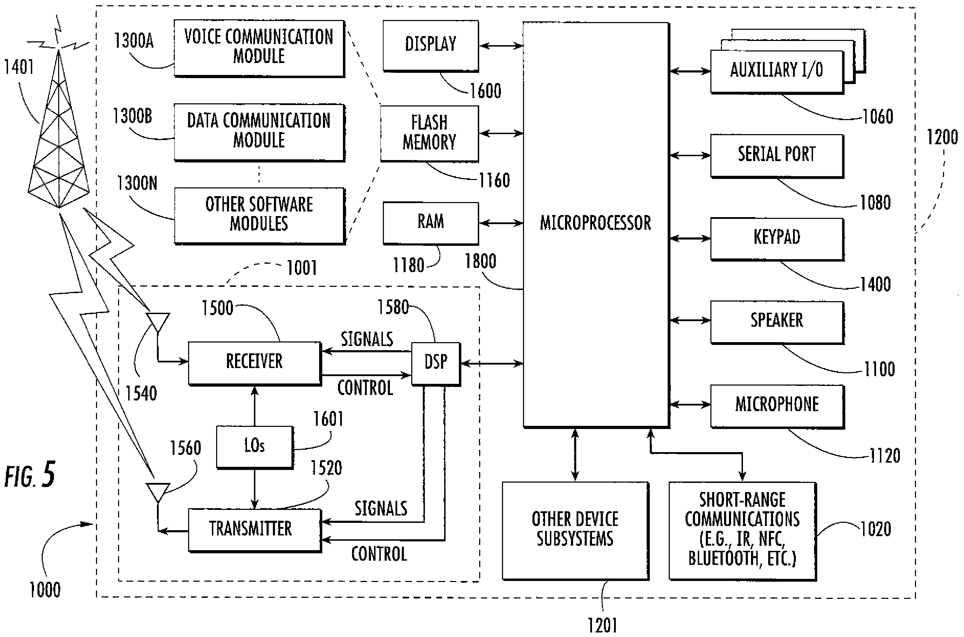

Example components of a mobile wireless communications device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device 1000 may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. An electronic device (10') comprising:
a mobile wireless cellular communications device (11') comprising
a first housing (17'),
a spatial diversity wireless transceiver (13') carried by said first housing,
at least one first antenna (14') carried by said first housing and coupled to said spatial diversity wireless transceiver,
a wireless local area networking -WLAN-transceiver (12') carried by said first housing and coupled to said spatial diversity wireless transceiver, and
a processor (15'); and
an external antenna device (20') comprising a second housing (26'), at least one second antenna (21') carried thereby and configured to be coupled to said spatial diversity wireless transceiver, a wireless transceiver (24'), and a battery (23') configured to power said wireless transceiver;
said spatial diversity wireless transceiver configured to selectively operate said at least one first antenna and said at least one second antenna to provide spatial diversity;
said WLAN transceiver configured to wirelessly couple said at least one second antenna to said spatial diversity wireless transceiver;
said processor (15') configured to operate said spatial diversity wireless transceiver in a first multiple-input/multiple-output -MIMO- rank mode when said at least one second antenna is not connected to said spatial diversity wireless transceiver, and further configured to operate said spatial diversity wireless transceiver in a second MIMO rank mode when said at least one second antenna is connected to said spatial diversity wireless transceiver, the second MIMO rank mode being greater than the first MIMO rank mode.

2. The electronic device of claim 1 wherein said WLAN transceiver (12') comprises a Bluetooth wireless transceiver configured to wirelessly couple said at least one second antenna to said spatial diversity wireless transceiver.

3. The electronic device of claim 1 wherein said spatial diversity wireless transceiver comprises a cellular 3GPP Long Term Evolution -LTE- transceiver (13').

4. The electronic device of claim 1 wherein said at least one first antenna is internal with respect to said first housing; and wherein said at least one second antenna is internal with respect to said second housing.

5. A method of providing spatial diversity in an electronic device (10') comprising a mobile wireless cellular communications device (11') including a first housing (17'), a spatial diversity wireless transceiver (13') carried by the first housing, at least one first antenna (14') carried by the first housing and coupled to the spatial diversity wireless transceiver, and a wireless local area networking -WLAN-transceiver (12') carried by the first housing, the method comprising:
wirelessly coupling at least one second antenna (21') carried by a second housing (26') of an external antenna device (20') comprising a wireless transceiver (24') and a battery (23') configured to power the wireless transceiver to the spatial diversity wireless transceiver via the WLAN transceiver;
using the spatial diversity wireless transceiver to selectively operate the at least one first antenna and the at least one second antenna to provide the spatial diversity; and
using a processor to operate said spatial diversity wireless transceiver in a first multiple-input/multiple-output - MIMO- rank mode when said at least one second antenna is not connected to said spatial diversity wireless transceiver, and to further operate said spatial diversity wireless transceiver in a second MIMO rank mode when said at least one second antenna is connected to said spatial diversity wireless transceiver, the second MIMO rank mode being greater than the first MIMO rank mode.

6. The method of claim 5 wherein the WLAN transceiver comprises a Bluetooth wireless transceiver (12') for wirelessly coupling the at least one second antenna to the spatial diversity wireless transceiver.

7. The method of claim 5 wherein the mobile wireless cellular communications device comprises a processor (15') operating the spatial diversity wireless transceiver in a first multiple-input/multiple-output -MIMO- rank mode when the at least one second antenna is not connected to the spatial diversity wireless transceiver.

8. The method of claim 5 wherein the spatial diversity wireless transceiver comprises a cellular 3GPP Long Term Evolution -LTE- transceiver.

9. A computer-readable storage medium having instructions stored thereon, wherein the instructions are executable by a processor of an electronic device to perform the method of any one of claims 5-8.

## Patentansprüche

1. Elektronische Vorrichtung (10'), umfassend:
eine mobile drahtlose Funkkommunikationsvorrichtung (11') umfassend
ein erstes Gehäuse (17'),
einen drahtlosen Raumdiversitäts-Transceiver (13'), der von dem ersten Gehäuse getragen wird,
mindestens eine erste Antenne (14'), die von dem ersten Gehäuse getragen wird und mit dem drahtlosen Raumdiversitäts-Transceiver verbunden ist,
einen drahtlosen Local Area Networking-(WLAN-)Transceiver (12'), der von dem ersten Gehäuse getragen wird und mit dem drahtlosen Raumdiversitäts-Transceiver verbunden ist, und
einen Prozessor (15'); und
eine externe Antennenvorrichtung (20'), die ein zweites Gehäuse (26'), mindestens eine zweite Antenne (21'), die von diesem getragen wird und zum Verbinden mit dem drahtlosen Raumdiversitäts-Transceiver konfiguriert ist, einen drahtlosen Transceiver (24') und eine Batterie (23') umfasst, die zum Antreiben des drahtlosen Transceivers konfiguriert ist;
wobei
der drahtlose Raumdiversitäts-Transceiver zum selektiven Betreiben der mindestens einen ersten Antenne und der mindestens einen zweiten Antenne selektiv konfiguriert ist, um Raumdiversität bereitzustellen;
der WLAN-Transceiver zum drahtlosen Verbinden der mindestens einen zweiten Antenne mit dem drahtlosen Raumdiversität-Transceiver konfiguriert ist;
der Prozessor (15') zum Betreiben des drahtlosen Raumdiversitäts-Transceivers in einem ersten Multiple Input/Multiple Output-(MIMO-)Rangmodus konfiguriert ist, wenn die mindestens eine zweite Antenne nicht mit dem drahtlosen Raumdiversität-Transceiver verbunden ist, und ferner zum Betreiben des drahtlosen Raumdiversitäts-Transceivers in einem zweiten MIMO-Rangmodus konfiguriert ist, wenn die mindestens eine zweite Antenne mit dem drahtlosen Raumdiversität-Transceiver verbunden ist, wobei der zweite MIMO-Rangmodus größer als der erste MIMO-Rangmodus ist.

2. Elektronische Vorrichtung nach Anspruch 1, wobei der WLAN-Transceiver (12') einen drahtlosen Bluetooth-Transceiver umfasst, der zum drahtlosen Verbinden der mindestens einen zweiten Antenne mit dem drahtlosen Raumdiversität-Transceiver konfiguriert ist.

3. Elektronische Vorrichtung nach Anspruch 1, wobei der drahtlose Raumdiversitäts-Transceiver einen 3GPP Long Term Evolution-(LTE-)Funktransceiver (13') umfasst.

4. Elektronische Vorrichtung nach Anspruch 1 wobei die mindestens eine erste Antenne bezüglich des ersten Gehäuses im Inneren ist; und wobei die mindestens eine zweite Antenne bezüglich des zweiten Gehäuses im Inneren ist.

5. Verfahren zum Bereitstellen von Raumdiversität in einer elektronischen Vorrichtung (10'), die eine mobile drahtlose Funkkommunikationsvorrichtung (11') umfasst, die ein erstes Gehäuse (17'), einen drahtlosen Raumdiversitäts-Transceiver (13'), der vom ersten Gehäuse getragen wird, mindestens eine erste Antenne (14'), die von dem ersten Gehäuse getragen wird und mit dem drahtlosen Raumdiversitäts-Transceiver verbunden ist, und einen Wireless Local Area Networking-(WLAN-)Transceiver (12') umfasst, der vom ersten Gehäuse getragen wird, das Verfahren umfassend:
drahtloses Verbinden mindestens einer zweiten Antenne (21'), die von einem zweiten Gehäuse (26') einer externen Antennenvorrichtung (20') getragen wird, mit dem drahtlosen Raumdiversitäts-Transceiver über den WLAN-Transceiver, wobei die externe Antennenvorrichtung (20') einen drahtlosen Transceiver (24') und eine Batterie (23') aufweist, die zum Antreiben des drahtlosen Transceivers konfiguriert ist;
Verwenden des drahtlosen Raumdiversitäts-Transceivers zum selektiven Betreiben der mindestens einen ersten Antenne und der mindestens einen zweiten Antenne, um die Raumdiversität bereitzustellen; und
Verwenden eines Prozessors zum Betreiben des drahtlosen Raumdiversitäts-Transceivers in einem ersten Multiple Input/Multiple Output-(MIMO-) Rangmodus, wenn die mindestens eine zweite Antenne nicht mit dem drahtlosen Raumdiversität-Transceiver verbunden ist, und ferner zum Betreiben des drahtlosen Raumdiversitäts-Transceivers in einem zweiten MIMO-Rangmodus, wenn die mindestens eine zweite Antenne mit dem drahtlosen Raumdiversität-Transceiver verbunden ist, wobei der zweite MIMO-Rangmodus größer als der erste MIMO-Rangmodus ist.

6. Verfahren nach Anspruch 5, wobei der WLAN-Transceiver einen drahtlosen Bluetooth-Transceiver (12') zum drahtlosen Verbinden der mindestens einen zweiten Antenne mit dem drahtlosen Raumdiversität-Transceiver umfasst.

7. Verfahren nach Anspruch 5, wobei die mobile drahtlose Funkkommunikationsvorrichtung einen Prozessor (15') umfasst, der den drahtlosen Raumdiversitäts-Transceiver in einem ersten Multiple Input/Multiple Output-(MIMO-)Rangmodus betreibt, wenn die mindestens eine zweite Antenne nicht mit dem drahtlosen Raumdiversität-Transceiver verbunden ist.

8. Verfahren nach Anspruch 5, wobei der drahtlose Raumdiversitäts-Transceiver einen 3GPP Long Term Evolution-(LTE-)Funktransceiver umfasst.

9. Computerlesbares Speichermedium, auf dem Anweisungen gespeichert sind, wobei die Anweisungen von einem Prozessor einer elektronischen Vorrichtung ausführbar sind, um das Verfahren nach einem der Ansprüche 5-8 durchzuführen.

## Revendications

1. Dispositif électronique (10') comprenant :
un dispositif de communications cellulaire sans fil mobile (11') comprenant
un premier boîtier (17'),
un émetteur-récepteur sans fil en diversité spatiale (13') porté par ledit premier boîtier,
au moins une première antenne (14') portée par ledit premier boîtier et couplée audit émetteur-récepteur sans fil en diversité spatiale,
un émetteur-récepteur de mise en réseau local sans fil (12') porté par ledit premier boîtier et couplé audit émetteur-récepteur sans fil en diversité spatiale, et
un processeur (15') ; et
un dispositif d'antenne externe (20') comprenant un second boîtier (26'), au moins une seconde antenne (21') portée par celui-ci et configurée pour être couplée audit émetteur-récepteur sans fil en diversité spatiale, un émetteur-récepteur sans fil (24'), et une batterie (23') configurée pour alimenter ledit émetteur-récepteur sans fil ;
ledit émetteur-récepteur sans fil en diversité spatiale configuré pour faire fonctionner sélectivement ladite au moins une première antenne et ladite au moins une seconde antenne pour fournir une diversité spatiale ;
ledit émetteur-récepteur WLAN configuré pour coupler de manière sans fil ladite au moins une seconde antenne audit émetteur-récepteur sans fil en diversité spatiale ;
ledit processeur (15') configuré pour faire fonctionner ledit émetteur-récepteur sans fil en diversité spatiale dans un premier mode de rang à entrées multiples/sorties multiples -MIMO- lorsque ladite au moins une seconde antenne n'est pas connectée audit émetteur-récepteur sans fil en diversité spatiale, et en outre configuré pour faire fonctionner ledit émetteur-récepteur sans fil en diversité spatiale dans un second mode de rang MIMO lorsque ladite au moins une seconde antenne est connectée audit émetteur-récepteur sans fil en diversité spatiale, le second mode de rang MIMO étant supérieur au premier mode de rang MIMO.

2. Dispositif électronique selon la revendication 1, dans lequel ledit émetteur-récepteur WLAN (12') comprend un émetteur-récepteur sans fil Bluetooth configuré pour coupler de manière sans fil ladite au moins une seconde antenne audit émetteur-récepteur sans fil en diversité spatiale.

3. Dispositif électronique selon la revendication 1, dans lequel ledit émetteur-récepteur sans fil en diversité spatiale comprend un émetteur-récepteur d'Evolution à long terme -LTE- 3GPP cellulaire (13').

4. Dispositif électronique selon la revendication 1, dans lequel ladite au moins une première antenne est interne par rapport audit premier boîtier ; et dans lequel ladite au moins une seconde antenne est interne par rapport audit second boîtier.

5. Procédé de fourniture de diversité spatiale dans un dispositif électronique (10') comprenant un dispositif de communications cellulaire sans fil mobile (11') incluant un premier boîtier (17'), un émetteur-récepteur sans fil en diversité spatiale (13') porté par le premier boîtier, au moins une première antenne (14') portée par le premier boîtier et couplée à l'émetteur-récepteur sans fil en diversité spatiale, et un émetteur-récepteur de mise en réseau local sans fil -WLAN- (12') porté par le premier boîtier, le procédé comprenant :
le couplage sans fil d'au moins une seconde antenne (21') portée par un second boîtier (26') d'un dispositif d'antenne externe (20') comprenant un émetteur-récepteur sans fil (24') et une batterie (23') configurée pour alimenter l'émetteur-récepteur sans fil, à l'émetteur-récepteur sans fil en diversité spatiale via l'émetteur-récepteur WLAN ;
l'utilisation de l'émetteur-récepteur sans fil en diversité spatiale pour faire fonctionner sélectivement la au moins une première antenne et la au moins une seconde antenne pour fournir la diversité spatiale ; et
l'utilisation d'un processeur pour faire fonctionner ledit émetteur-récepteur sans fil en diversité spatiale dans un premier mode de rang à entrées multiples/sorties multiples -MIMO- lorsque ladite au moins une seconde antenne n'est pas connectée audit émetteur-récepteur sans fil en diversité spatiale, et en outre pour faire fonctionner ledit émetteur-récepteur sans fil en diversité spatiale dans un second mode de rang MIMO lorsque ladite au moins une seconde antenne est connectée audit émetteur-récepteur sans fil en diversité spatiale, le second mode de rang MIMO étant supérieur au premier mode de rang MIMO.

6. Procédé selon la revendication 5, dans lequel l'émetteur-récepteur WLAN comprend un émetteur-récepteur sans fil Bluetooth (12') pour coupler de manière sans fil la au moins une seconde antenne à l'émetteur-récepteur sans fil en diversité spatiale.

7. Procédé selon la revendication 5, dans lequel le dispositif de communications cellulaire sans fil mobile comprend un processeur (15') faisant fonctionner l'émetteur-récepteur sans fil en diversité spatiale dans un premier mode de rang à entrées multiples/sorties multiples -MIMO- lorsque la au moins une seconde antenne n'est pas connectée à l'émetteur-récepteur sans fil en diversité spatiale.

8. Procédé selon la revendication 5, dans lequel l'émetteur-récepteur sans fil en diversité spatiale comprend un émetteur-récepteur d'Evolution à long terme - LTE- 3GPP cellulaire.

9. Support de stockage lisible par ordinateur sur lequel sont stockées des instructions, dans lequel les instructions sont exécutables par un processeur d'un dispositif électronique pour effectuer le procédé selon l'une quelconque des revendications 5 à 8.
